# EUROPÄISCHE PATENTSCHRIFT

(11) **EP 2 740 556 B1**
(45) Veröffentlichungstag und Bekanntmachung des Hinweises auf die Patenterteilung: **11.01.2017**
(21) Anmeldenummer: 13005585.8
(22) Anmeldetag: 28.11.2013
(51) Int. Cl.: B23D 45/12, B23D 21/04

(54) **Trennvorrichtung mit zur Abstützung von Werkstücke, wie Stangen, Rohre und dergleichen, dienenden Rollen**
Cutting device comprising rollers for supporting workpieces, such as bars, pipes and the like
Dispositif de coupe comportant des rouleaux pour le support de pièces telles que tiges, tuyaux et analogues

(30) Priorität: 07.12.2012 DE 102012023901
(43) Veröffentlichungstag der Anmeldung: 11.06.2014
(73) Patentinhaber: REMS GmbH & Co KG, 71332 Waiblingen (DE)
(72) Erfinder: Wagner, Rudolf, 70376 Stuttgart (DE)
(74) Vertreter: Kohl, Karl-Heinz

(56) Entgegenhaltungen:
- WO-A1-88/06934
- DE-A1- 19 925 826
- DE-B4-102005 053 179
- JP-A- H01 234 154
- US-A- 3 572 199
- US-A1- 2002 088 326
- US-A1- 2005 022 353

## Beschreibung

Die Erfindung betrifft eine Trennvorrichtung für zur Abstützung von Werkstücken, wie Stangen, Rohre und dergleichen, dienenden Rollen nach dem Oberbegriff des Anspruches 1.

Es sind Trennvorrichtungen bekannt (US 5 829 142 A), bei denen das Schneidrad frei drehbar in einem Schwenkarm gelagert ist. Er ist mit einem weiteren Schwenkarm gelenkig verbunden, der Auflagerollen für das durchzutrennende Werkstück aufweist. Durch einen im Schwenkarm untergebrachten Antrieb werden die Rollen drehbar angetrieben. Zum Durchtrennen des Werkstückes muss das Schneidrad über den Schwenkarm mit hoher Kraft gegen das Werkstück gedrückt werden. Dadurch ist das Schneidrad einer hohen Belastung ausgesetzt und verschleißt darum frühzeitig.

Es sind weiter Trennvorrichtungen bekannt, die ein drehbar angetriebenes Schneidrad haben, mit dem die Rohre durchtrennt werden. Das Schneidrad sitzt auf einem Schwenkträger, der um eine parallel zur Rohrachse liegende Achse schwenkbar ist.

Es ist ferner eine Trennvorrichtung gemäß dem Oberbegriff des Anspruchs 1 bekannt (DE 10 2005 053 179 B4), bei
der das durchzutrennende Werkstück auf frei drehbaren Rollen aufliegt. Sie sind paarweise einander gegenüberliegend angeordnet. Die einander gegenüberliegenden Rollen jedes Rollenpaares liegen jeweils auf gleicher Höhe. Zum Durchtrennen von Rohren mit kleinerem Durchmesser ist die Trennvorrichtung gut geeignet.

Es ist schließlich eine Trennvorrichtung bekannt (US 3 572 199 A), die paarweise einander auf gleicher Höhe gegenüberliegende Rollen aufweist, auf denen das zu durchzutrennende Werkstück aufliegt. Während des Trennvorganges wird das Werkstück durch die Rollen um seine Achse drehbar angetrieben. Mit dem angetriebenen Schneidrad wird das Werkstück getrennt, das während des Trennvorganges um seine Achse dreht.

Der Erfindung liegt die Aufgabe zugrunde, die gattungsgemäße Trennvorrichtung so auszubilden, dass auch Werkstücke mit größerem Durchmesser zuverlässig und sauber durchtrennt werden können.

Diese Aufgabe wird bei der gattungsgemäßen Trennvorrichtung erfindungsgemäß mit den kennzeichnenden Merkmalen des Anspruches 1 gelöst.

Bei der erfindungsgemäßen Trennvorrichtung liegen die Rollen des unteren und/oder des oberen Rollenpaares in unterschiedlicher Höhe. Da die Kontaktstelle zwischen dem Schneidrad und dem Werkstück in der Ebene liegt, die sich senkrecht zu einer Verbindungsgeraden zwischen den Achsen der Rollen des unteren oder des oberen Rollenpaares erstreckt, auf denen das Werkstück aufliegt, liegt die beim Trennvorgang wirkende Schnittkraft in der senkrecht zur Verbindungsgeraden liegenden Ebene. Dies hat zur Folge, dass das Werkstück beim Trennvorgang nicht aus der Abstützung seitlich herausgedrückt wird, sondern dass die Schnittkraft stets in der Ebene des Werkstückes wirksam ist. Dadurch können auch im Durchmesser große Werkstücke einwandfrei durchtrennt werden. Selbst wenn bei großen Durchmessern die Werkstücke nur auf den Rollen des oberen Rollenpaares aufliegen und in nur geringem Maße zwischen diese Rollen eingreifen, wird das Werkstück sicher durchtrennt.

Aufgrund der erfindungsgemäßen Ausbildung kann der Abstand des Schneidrades zu seiner Linearführung klein gehalten werden, so dass auch die Abstützung für die Werkstücke selbst bei großen Durchmessern schmal gehalten werden kann.

Die Trennvorrichtung dient zum Durchtrennen insbesondere von Rohren, kann aber auch zum Durchtrennen von Stangen und dergleichen eingesetzt werden.

Die Kontaktstelle zwischen dem Schneidrad und dem Werkstück liegt in einer Axialebene des Schneidrades, die sich in Verstellrichtung des Schneidrades erstreckt. Üblicherweise ist die Verstellrichtung die Vertikalrichtung, so dass die Axialebene des Schneidrades dann eine Vertikalebene ist.

Die Axialebene des Schneidrades liegt mit einem Abstand von einer parallel zu ihr verlaufenden Axialebene des durchzutrennenden Werkstückes. Der Schnittpunkt der Axialebene des Schneidrades mit dem Werkstück bildet die Kontaktstelle zwischen dem Schneidrad und dem Werkstück.

Um bei unterschiedlich großen Durchmessern die Werkstücke zuverlässig durchtrennen zu können, ist es vorteilhaft, wenn die Rollen auf der einen Seite der Rollenpaare einen größeren Abstand voneinander haben als die Rollen auf der anderen Seite dieser Rollenpaare.

Hierbei liegen vorteilhaft diejenigen Rollen, die benachbart zur Außenseite eines Bettes der Trennvorrichtung liegen, jeweils höher als die gegenüberliegenden Rollen der entsprechenden Rollenpaare. Dadurch wird durch diese jeweils außen liegenden, höher angeordneten Rollen sichergestellt, dass die Werkstücke beim Trennvorgang nicht seitlich vom Bett der Trennvorrichtung gedrückt werden, sondern durch die höher liegenden Rollen einwandfrei abgestützt werden.

Bei einer bevorzugten Ausführungsform liegen die tiefer liegenden Rollen der Rollenpaare benachbart zu einer Linearführung für das Schneidrad.

Die Linearführung ist vorteilhaft Teil eines Ständers, der vom Bett der Trennvorrichtung vertikal absteht.

Vorteilhaft wird die Höhenverstellung des Schneidrades mittels einer Gewindespindel erreicht, die im Ständer drehbar gelagert ist. Auf der Spindel sitzt eine Spindelmutter, über die das Schneidrad linear in Höhenrichtung verstellbar ist.

Die Rollen der Abstützung haben vorteilhaft gleichen Durchmesser.

Die Auflage für die Werkstücke zeichnet sich dadurch aus, dass sie mit einem Auflageteil versehen ist, der zwei winklig zueinander liegende Schenkel aufweist, die an ihren einander zugewandten Seiten mit jeweils wenigstens einem Auflageelement versehen sind. Diese Auflage wird vorteilhaft zusammen mit der Trennvorrichtung verwendet, um das durchzutrennende Werkstück im Bereich außerhalb der Trennvorrichtung abzustützen. Die Auflage kann aber auch unabhängig von der Trennvorrichtung eingesetzt werden.

Das Auflageelement ist vorteilhaft eine frei drehbare Kugel, auf der das Werkstück während des Trennvorganges aufliegt. Dadurch kann sich das Werkstück, das beim Trennvorgang durch das Schneidrad um seine Achse drehbar angetrieben wird, einwandfrei drehen.

Um die Auflage an unterschiedliche Durchmesser der Werkstücke anzupassen, ist der Auflageteil vorteilhaft in der Höhe verstellbar, vorzugsweise stufenlos.

Die Auflage ist bei einer bevorzugten Ausführungsform mit Stützschenkeln versehen, die an die beiden Schenkel des Auflageteiles winklig anschließen. Vorteilhaft sind die Stützschenkel einstückig mit den Schenkeln des Auflageteiles ausgebildet. Dann können durch einen einfachen Biegevorgang die Schenkel und Stützschenkel in die erforderliche Lage zueinander gebracht werden.

Der eine Stützschenkel kann zur Abstützung der Auflage auf dem Untergrund herangezogen werden. Vorteilhaft ist es jedoch, den einen Stützschenkel mit einem Auflageteil, vorzugsweise einem Rohrstück, zu verbinden. Dann ergibt sich eine einwandfreie Abstützung der Auflage auf dem Untergrund.

Der andere Stützschenkel ist bei einer bevorzugten Ausführungsform relativ zu wenigstens einem weiteren Auflageteil höhenverstellbar. Dadurch ist es in einfacher Weise möglich, durch Verstellen des anderen Stützschenkels gegenüber dem weiteren Auflageteil die Auflage an unterschiedliche Werkstückdurchmesser anzupassen.

Bei einer konstruktiv einfachen Ausbildung weist der weitere Auflageteil wenigstens einen in Höhenrichtung verlaufenden Längsschlitz auf. Durch ihn ragt ein mit dem anderen Stützschenkel verbundener Gewindeteil, vorzugsweise ein Gewindebolzen. Auf ihn kann ein Klemmknebel geschraubt werden, mit dem der weitere Auflageteil an der Außenseite des anderen Stützschenkels verspannt wird.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: teilweise im Schnitt und teilweise in Ansicht eine erfindungsgemäße Trennvorrichtung,
- Fig. 2: die erfindungsgemäße Trennvorrichtung in Vorderansicht,
- Fig. 3: in perspektivischer Darstellung eine Auflage für Werkstücke,
- Fig. 4: die Auflage gemäß Fig. 3 in Seitenansicht,
- Fig. 5: die Auflage gemäß Fig. 3 in Draufsicht.

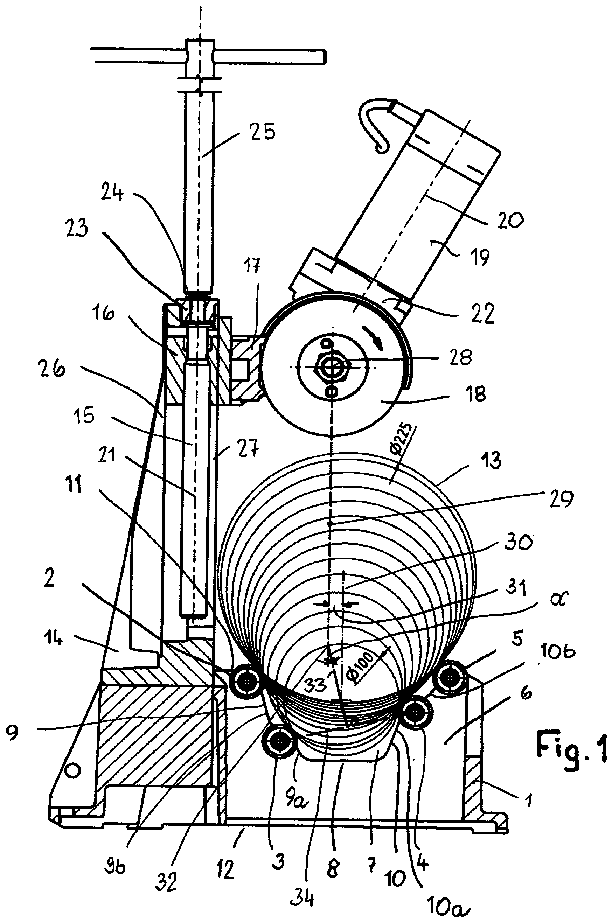

Mit der Trennvorrichtung werden Rohre, aber auch Stangen und dergleichen unterschiedlichen Durchmessers abgetrennt. In Fig. 1 sind beispielhaft Rohrdurchmesser von 100 bis 225 mm angegeben. Die Trennvorrichtung dient somit zum Durchtrennen von Rohren größeren Durchmessers.

Die Vorrichtung hat ein Bett 1, an dessen Oberseite mehrere Auflagerollen 2 bis 5 frei drehbar gelagert sind. Sie haben vorteilhaft gleichen Durchmesser und sind mit ihren Enden in Lagerböcken 6 drehbar gelagert, die vorteilhaft einstückig mit dem Bett 1 ausgebildet sind. Die Rollen 2 bis 5 sind vorteilhaft mit einem Reibbelag versehen, so dass sie beim Trennvorgang vom Rohr in noch zu beschreibender Weise zuverlässig um ihre Achsen gedreht werden können.

Die Lagerböcke 6 haben jeweils einen Ausschnitt 7 mit einem geraden Boden 8, an den zwei divergierend verlaufende Seitenwände 9, 10 anschließen, die sich bis zur Oberseite 11 der Lagerböcke 6 erstrecken. Der Boden 9 der Ausschnitte 7 liegt mit Abstand zur Unterseite 12 des Bettes 1. Die Vertiefungen 7 durchsetzen die Lagerböcke 6. Wie Fig. 1 zeigt, bestehen die Seitenwände 9, 10 aus zwei gegeneinander versetzten Wandabschnitten 9a, 9b sowie 10a, 10b. Die Rollen 2 bis 5 sind so angeordnet, dass sie über die Seitenwände 9, 10 der Ausschnitte 7 ragen. Die oberen Lagerrollen 2, 5 ragen außerdem über die Oberseite 11 der Lagerböcke 6 (Fig. 1).

Jeweils zwei Rollen liegen einander gegenüber, wobei einander gegenüberliegende Rollen 2, 5 und 3, 4 auf unterschiedlichen Höhen liegen. Die Rolle 3 ist im Bereich des Seitenwandabschnittes 9a gelagert und hat den geringsten Abstand von der Unterseite 12 des Bettes 1. Die gegenüberliegende, im Übergangsbereich zwischen den Seitenwandabschnitten 10a, 10b gelagerte Rolle 4 hat einen größeren Abstand von der Bettunterseite 12 als die Rolle 3. Die Rolle 2, die über den Seitenwandabschnitt 9b sowie über die Oberseite 11 der Lagerböcke 2 ragt, hat wiederum einen größeren Abstand von der Bettunterseite 12 als die Rolle 4. Die der Rolle 2 gegenüberliegende Rolle 5, die ebenfalls über die Oberseite 11 der Lagerböcke 2 sowie über die Seitenwandabschnitte 10b ragt, hat den größten Abstand von der Bettunterseite 12. Die im Bereich der Seitenwände 9 und 10 liegenden Rollen 2, 3 und 4, 5 sind außerdem derart versetzt zueinander angeordnet, dass die jeweils untere Rolle 3, 4 größeren Abstand von der Seitenwand des Bettes 1 hat als die jeweils mit Abstand darüberliegende Rolle 2, 5. Die Rollen 2, 3 im Bereich der Seitenwand 9 haben einen größeren Abstand voneinander als die an der gegenüberliegenden Seitenwand 10 angeordneten Rollen 4, 5.

Je nach Durchmesser der mit der Trennvorrichtung durchzutrennenden Rohre 13 dienen unterschiedliche Rollen 2 bis 5 als Rohrauflage. Bei kleineren Rohrdurchmessern, wie dies beispielhaft für den Rohrdurchmesser von 100 mm dargestellt ist, liegt das Rohr auf den beiden unteren Rollen 3, 4 auf. Bei größeren Rohrdurchmessern liegt das Rohr 13 auf den oberen Rollen 2, 5 auf.

An einer Längsseite des Bettes 1 ist ein vertikaler Ständer 14 vorgesehen, in dem eine um ihre Achse drehbare Gewindespindel 15 drehbar gelagert ist. Auf ihr sitzt eine Spindelmutter 16, die durch Drehen der Gewindespindel 15 nach oben oder unten bewegt werden kann. Die Spindelmutter 16 ist mit einem Gehäuseteil 17 verbunden, in dem ein (nicht dargestelltes) Getriebe zum Antrieb eines Schneidrades 18 untergebracht ist. Der Gehäuseteil 17 ist mit einem Gehäuse 19 verbunden, in dem ein Antrieb, vorzugsweise ein Elektromotor, zum Drehantrieb des Schneidrades 18 untergebracht ist. Die Längsachse 20 des Gehäuses 19 liegt unter einem spitzen Winkel zur Achse 21 der Gewindespindel 15. Das Gehäuse 19 ist somit von der Spindelmutter 16 aus schräg nach oben gerichtet, so dass das Gehäuse 19 von einer Bedienungsperson bequem erfasst werden kann.

Zwischen dem Gehäuseteil 17 und dem Gehäuse 19 befindet sich vorteilhaft ein Zwischengehäuseteil 22, das lösbar mit dem Gehäuse 19 und/oder dem Gehäuseteil 17 verbunden ist. Im Zwischengehäuseteil 22 befindet sich wenigstens eine Getriebestufe, mit welcher die Drehzahl der Antriebswelle des im Gehäuse 19 untergebrachten Antriebes heruntergesetzt werden kann. Dieser ersten Getriebestufe ist vorteilhaft eine zweite Getriebestufe nachgeschaltet, die im Gehäuseteil 17 untergebracht ist. Auf diese Weise wird über ein vorteilhaft zweistufiges Untersetzungsgetriebe die hohe Drehzahl der Motorwelle des im Gehäuse 19 untergebrachten Elektromotors auf die Drehzahl des Schneidrades 18 untersetzt.

Die zweite Getriebestufe wird vorteilhaft durch ein Schneckengetriebe gebildet, dessen Schnecke in Eingriff mit einem Schneckenrad ist, das drehfest auf einer das Schneidrad 18 tragenden Welle sitzt.

Die Gewindespindel 15 ist an ihrem oberen Ende in einem Lager 23 drehbar gelagert. Es befindet sich an der Oberseite des Ständers 14 und weist eine Formschlussmitnahme 24 auf, in die ein Betätigungselement 25 zum Drehen der Gewindespindel 15 gesteckt werden kann. Da das Betätigungselement 25 nach oben über den Ständer 14 vorsteht, kann es vom Benutzer leicht betätigt werden.

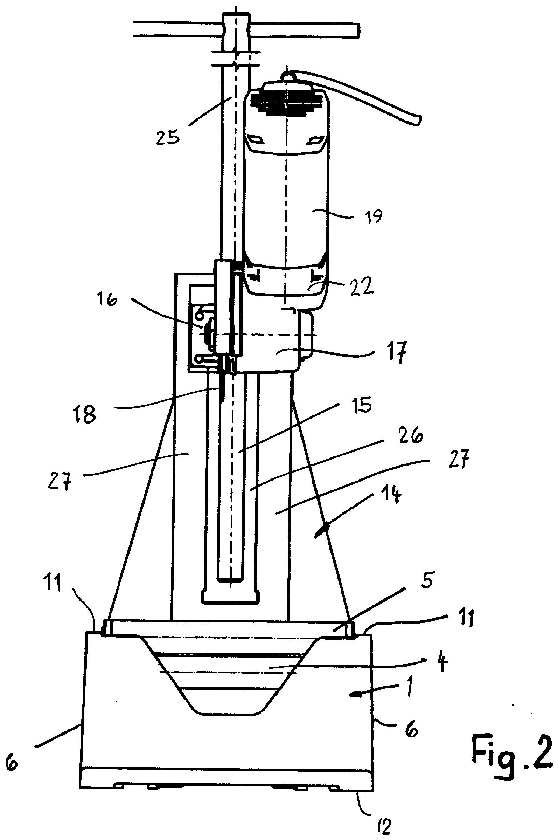

Der Ständer 14 hat vorteilhaft U-förmigen Querschnitt mit einem Steg 26, der zwei parallel zueinander liegende Schenkel 27 miteinander verbindet (Fig. 2), von denen in Fig. 1 nur der eine Schenkel 27 erkennbar ist. Die Schenkel 27 können an ihren freien Enden in Richtung zueinander abgewinkelt sein. Die Gewindespindel 15 liegt zwischen den beiden Schenkeln 27. Die Spindelmutter 16 befindet sich zwischen den beiden Schenkeln 27 und wird vorteilhaft an den einander gegenüberliegenden Innenseiten der Schenkel geführt. Die Spindelmutter 16 ist damit während ihrer Verschiebebewegung längs des Ständers 14 sicher kipp- und verkantungsfrei geführt, so dass am Rohr 13 ein sauberer Trennvorgang durchgeführt werden kann.

Die Achse 28 der das Schneidrad 18 tragenden Welle liegt in einer vertikalen Axialebene 29, die sich durch die Vertiefungen 7 der Lagerböcke 6 außermittig erstreckt. Wie sich aus Fig. 1 ergibt, hat die Axialebene 29 von den Rollen 2, 3 kleineren Abstand als von den Rollen 4, 5. Die beiden Ausschnitte 7 haben eine gemeinsame Mittelebene 30 (Fig. 1), die mit einem Abstand 31 neben der Axialebene 29 liegt. Die Mittelebene 30 bildet auch die Längsmittelebene der Rohre 13.

Soll ein Rohr 13 durchtrennt werden, dann wird es auf die Lagerrollen 2 bis 5 gelegt. Je nach Durchmesser des Rohres 13 liegt das Rohr auf den beiden unteren Rollen 3, 4 oder auf den beiden oberen Rollen 2, 5 auf. Durch Drehen der Gewindespindel 15 mit Hilfe des Betätigungselementes 25 wird über die Spindelmutter 16 das Schneidrad 18 gegen das Rohr 13 geführt. Vor oder während des Verstellvorganges wird der Antrieb des Schneidrades 18 bereits eingeschaltet, so dass das angetriebene Schneidrad 18 mit dem Rohr 13 in Berührung kommt. Das Rohr 13 wird durch das Schneidrad 18 um seine Achse drehbar angetrieben, wobei die entsprechenden Rollen 2 bis 5, auf denen das Rohr 13 aufliegt, durch das drehende Rohr 13 ebenfalls um ihre zueinander parallelen Achsen gedreht werden. Ist das Rohr 13 durchtrennt, wird die Spindelmutter 16 durch Drehen der Gewindespindel 15 in die andere Richtung wieder nach oben bewegt, bis das Schneidrad 18 oberhalb des durchgetrennten Rohres 13 liegt.

Die Rollen 2 bis 5 sind vorteilhaft in die Lagerböcke 6 eingelegt, so dass sie einfach abgenommen und gegen Rollen mit anderem Durchmesser ausgetauscht werden können, falls dies notwendig sein sollte.

Die Spindelmutter 16 kann einstückig mit dem Gehäuseteil 17 ausgebildet sein, was zu einer hohen Steifigkeit der Trennvorrichtung in diesem Bereich führt. In Verbindung mit der Führung der Spindelmutter 16 im Ständer 14 wird eine hervorragende Führung des Schneidrades 18 gewährleistet, mit dem dadurch ein sauberer senkrechter Schnitt am Rohr 13 vorgenommen werden kann. Die hohe Steifigkeit verhindert auch unerwünschte Schwingungen des Gehäuseteiles 17 bzw. des Schneidrades 18, die zu unsauberen Trennschnitten am Rohr 13 führen würden. Zur hohen Trennsauberkeit trägt bei, dass das Schneidrad 18 ausschließlich senkrecht bewegt wird. Die Führung des Schneidrades 18 über die Spindelmutter 16 stellt sicher, dass unerwünschte Querbewegungen des Schneidrades 18, die die Trennqualität beeinträchtigen würden, beim Trennvorgang nicht auftreten.

Die Kontaktstelle 32 zwischen dem Schneidrad 18 und dem Rohr 13, die in Fig. 1 für den kleinsten Rohrdurchmesser angegeben ist, liegt mit Abstand neben der Längsmittelebene 30. Dies hat zur Folge, dass die Kontaktstelle 32 zwischen dem Schneidrad 18 und dem Rohr 13 in einer Ebene 33 liegt, die senkrecht zur Verbindungsgeraden 34 zwischen den jeweils beiden unteren Rollen liegt, auf denen das Rohr 13 aufliegt. Im Ausführungsbeispiel liegt das Rohr 13 auf den beiden unteren Rollen 3, 4 auf, so dass die Verbindungsgerade 34 zwischen diesen beiden Rollen 3, 4 liegt. Liegt das Rohr 13 beispielsweise auf den beiden oberen Rollen 2, 5 auf, dann ist die Verbindungsgerade 34 die zwischen den beiden Achsen dieser Rollen 2, 5 sich erstreckende Gerade. Die Verbindungsgerade 34 schließt mit der vertikalen Axialebene 29, in der die Drehachse 28 des Schneidrades 18 liegt, einen spitzen Winkel α ein. Durch diese Lage des Kontaktbereiches 32 kann der Abstand des Schneidrades 18 vom Ständer 14 klein gehalten werden, obwohl Rohre 13 mit verhältnismäßig großem Durchmesser durchtrennt werden. Dieser geringe Abstand zwischen dem Schneidrad 18 und dem Ständer 14 führt auch zu einem entsprechend kurzen Hebelarm, der beim Trennvorgang wirksam ist. Der kurze Hebelarm zwischen dem Schneidrad 18 und dem Ständer 14 führt zu keinen unerwünschten Bewegungen des Schneidrades 18 beim Trennvorgang. Auch können infolge dieses kurzen Hebelarmes die Lagerböcke 6 für die Rollen 2 bis 5 verhältnismäßig schmal ausgebildet sein, so dass die Trennvorrichtung nur eine geringe Breite aufweist.

Aufgrund der beschriebenen Lage der Kontaktstelle 32 wird erreicht, dass die beim Trennvorgang vom Schneidrad 18 auf das Rohr 13 ausgeübte Schnittkraft in der Ebene 33 liegt, die senkrecht zur Verbindungsgeraden 34 verläuft. Dadurch wird erreicht, dass das Rohr 13 beim Trennvorgang nicht seitlich herausgedrückt wird, sondern dass die Schnittkraft stets in einer Axialebene des Rohres 13 wirksam ist. Die Ebene 33 verläuft durch die Achse des Rohres 13, so dass beim Trennvorgang die Schnittkraft in dieser Ebene 33 auftritt, obwohl die vertikale Axialebene 29 den Abstand 31 von der parallel zu ihr liegenden Mittelebene 30 aufweist.

Die beschriebenen Verhältnisse sind unabhängig vom Durchmesser der Rohre 13. Je größer der Rohrdurchmesser ist, desto vorteilhafter ist, dass die Ebene 33, die senkrecht auf der Verbindungsgeraden 34 der beiden unteren Rollen, auf denen das Rohr 13 aufliegt, durch die Kontaktstelle 32 verläuft und den spitzen Winkel α mit der vertikalen Axialebene 29 einschließt, in der die Kontaktstelle 32 liegt.

Im dargestellten bevorzugten Ausführungsbeispiel liegen nicht nur die unteren Rollen 3, 4, sondern auch die oberen Rollen 2, 5 auf unterschiedlicher Höhe. Es reicht bei kleineren Rohrdurchmessern aus, wenn nur die beiden unteren Rollen 3, 4 auf unterschiedlicher Höhe liegen, während die beiden oberen, einander gegenüberliegenden Rollen 2, 5 auf gleicher Höhe angeordnet sind. Bei größeren Rohrdurchmessern reicht es dementsprechend aus, wenn nur die beiden oberen Rollen 2, 5 auf unterschiedlicher Höhe liegen, während die unteren, einander gegenüberliegenden Rollen 3, 4 auf gleicher Höhe angeordnet sind.

Selbst wenn im Durchmesser größere Rohre 13 durchtrennt werden, erfolgt ein sauberer und zuverlässiger Trennschnitt, da infolge der beschriebenen Verhältnisse die Schnittkraft stets in der Ebene 33 wirksam ist. Dadurch können selbst dünnwandige Rohre einwandfrei getrennt werden.

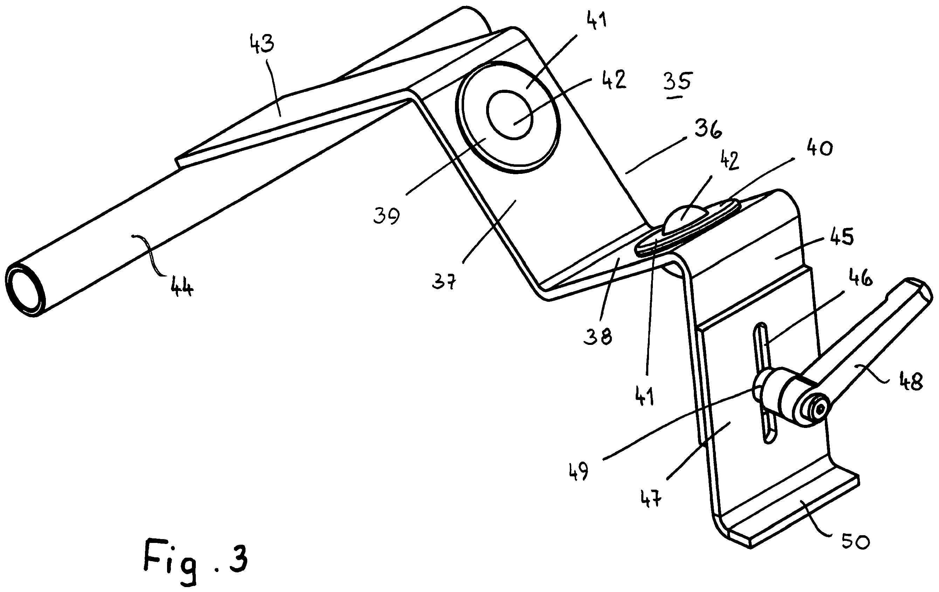

Damit die Rohre 13, die zum Teil erhebliche Längen aufweisen können, während des Trennvorganges zuverlässig abgestützt sind, ist die in den Fig. 3 bis 5 dargestellte Auflage 35 vorgesehen. Sie hat einen Auflageteil 36, der V-förmig ausgebildet ist und zwei Schenkel 37, 38 aufweist. Die beiden Schenkel 37, 38 weisen jeweils wenigstens ein Auflageelement 39, 40 auf. Es hat einen Halterungsteil 41, mit dem eine frei drehbare Kugel 42 gehalten wird. Sie steht über den Halterungsteil 41 über und dient als Auflage für das Rohr 13 während des beschriebenen Trennvorganges. Die beiden Auflageelemente 39, 40 sind nahe den freien Enden der beiden Schenkel 37, 38 angeordnet.

An den Schenkel 37 schließt winklig ein Stützschenkel 43 an, mit dem die Auflage 35 auf dem Untergrund aufliegt. Eine bessere Abstützung der Auflage 35 wird aber erreicht, wenn der Stützschenkel 43 mit seinem freien Ende an einem Rohrstück 44 befestigt wird, das sich über die Breite des Stützschenkels 43 hinaus erstreckt. Das Rohrstück 44 gewährleistet eine einwandfreie Abstützung der Auflage 35 auf dem Untergrund. Der Stützschenkel 43 ist an der Außenseite des Rohrstückes 44 vorzugsweise angeschweißt.

An den Schenkel 38 schließt ein Lagerschenkel 45 an, der winklig zum Schenkel 38 verläuft, vorzugsweise spitzwinklig. Vom Lagerschenkel 45 steht senkrecht nach außen ein (nicht dargestellter) Gewindebolzen ab, der durch einen Längsschlitz 46 in einem Abstützschenkel 47 vorgesehen ist und auf dem ein Klemmknebel 48 sitzt. Der Längsschlitz 46 ist in halber Breite des Abstützschenkels 47 vorgesehen und ermöglicht eine Verstellung des Auflageteiles 36 relativ zum Abstützschenkel 47. Dadurch kann der Auflageteil 36 an den Durchmesser des mit der Trennvorrichtung zu trennenden Rohres stufenlos angepasst werden. Der Klemmknebel 48 wird zur Verstellung geringfügig zurückgeschraubt, so dass der Lagerschenkel 45 relativ zum Abstützschenkel 47 in die gewünschte Lage verschoben werden kann. Anschließend wird der Klemmknebel 48 auf dem Gewindebolzen zurückgedreht und mit ihm der Abstützschenkel 47 gegen den Lagerschenkel 45 verspannt. Der Klemmknebel 48 hat ein Klemmstück 49, das in der Klemmstellung gegen die Außenseite des Abstützschenkels 47 gedrückt wird.

Um eine saubere Abstützung auf dem Untergrund zu gewährleisten, ist das untere Ende 50 des Abstützschenkels 47 vorteilhaft nach außen abgewinkelt, vorzugsweise rechtwinklig.

Vorteilhaft sind die Schenkel 37, 38, 43, 45 einstückig miteinander ausgebildet und haben gleiche Breite. Der Übergang zwischen den einzelnen Schenkeln ist jeweils gerundet ausgeführt.

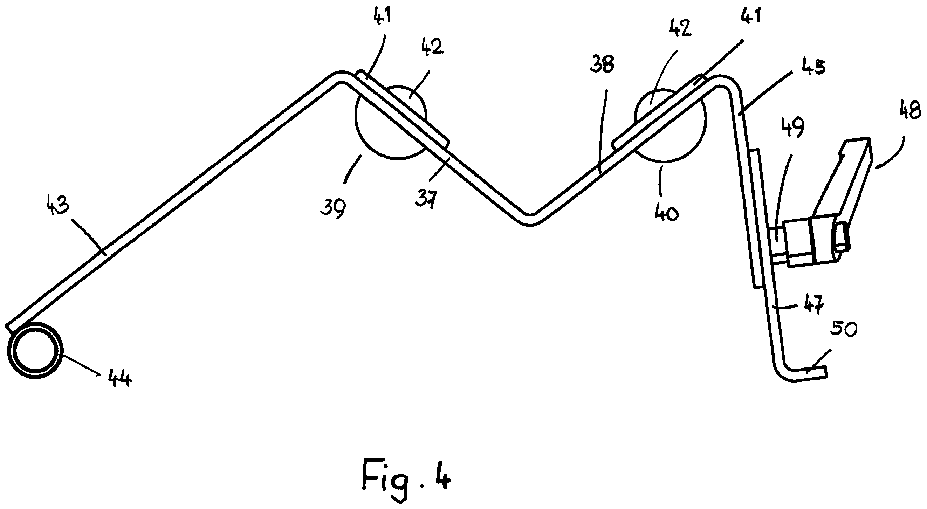

Wie aus Fig. 4 hervorgeht, ist der Stützschenkel 43 wesentlich länger als die Schenkel 37, 38, 45. Der Stützschenkel 43 schließt mit dem anschließenden Schenkel 37 vorteilhaft einen Winkel von >90° ein. Der Stützschenkel 43 ist vorteilhaft so auf dem Rohrstück 44 befestigt, dass in der Lage, in der der Gewindebolzen des Lagerschenkels 45 am oberen Ende des Längsschlitzes 46 anliegt, der Stützschenkel 43 noch keinen Bodenkontakt hat.

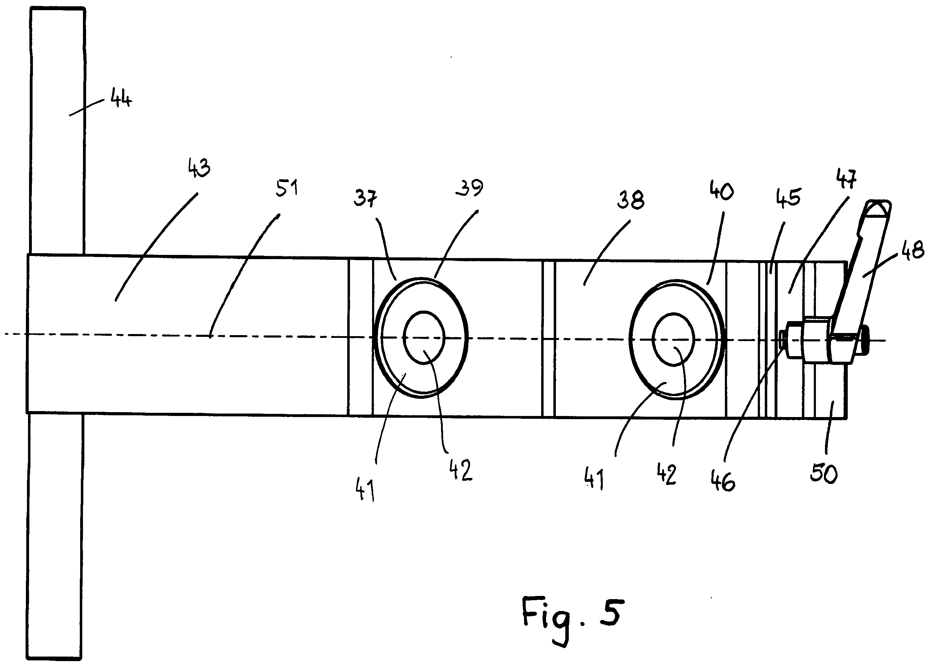

Der Schenkel 38 und der Lagerschenkel 45 liegen spitzwinklig zueinander. Wenn die Schenkel 37, 38, 43, 45 in vorteilhafter Weise einstückig miteinander ausgebildet sind, können sie durch einen einfachen Biegevorgang in die gewünschte Relativlage zueinander gebracht werden. Sämtliche Schenkel 37, 38, 43, 45, 47 haben vorteilhaft gleiche Breite (Fig. 5). Die Auflageelemente 39, 40 sowie der Längsschlitz 46 liegen in der Längsmittelebene 51 der Auflage.

Die beiden die Auflageelemente 39, 40 aufweisenden Schenkel 37, 38 liegen vorteilhaft stumpfwinklig zueinander, so dass auch im Durchmesser größere Rohre während des Trennvorganges einwandfrei abgestützt werden können. Da die Rollen 42 frei drehbar gelagert sind, behindern sie nicht den Trennvorgang, bei dem das Rohr 13 durch das Schneidrad 18 in der beschriebenen Weise um seine Achse gedreht wird.

Die Auflage 35 ist ein konstruktiv einfaches Bauteil, das zudem nur wenig Aufstellraum benötigt. Aufgrund seiner beschriebenen Ausbildung kann es für einen großen Durchmesserbereich der Rohre 13 eingesetzt werden. Die beschriebene Höhenverstellung mit Hilfe des Klemmknebels 48 stellt sicher, dass die Auflage 35 optimal auf unterschiedliche Rohrdurchmesser eingestellt werden kann.

## Patentansprüche

1. Trennvorrichtung mit zur Abstützung von Werkstücken (13), wie Stangen, Rohre und dergleichen, dienenden Rollen (2 bis 5), die paarweise einander gegenüber liegen, von denen das untere Rollenpaar (3, 4) mit Abstand unterhalb des oberen Rollenpaares (2, 5) liegt, und die Rollen des unteren Rollenpaares (3, 4) kleineren Abstand voneinander haben als die Rollen des oberen Rollenpaares (2, 5), und mit einem Schneidrad (18), das in Richtung auf die Abstützung linear verstellbar ist und beim Trennvorgang das Werkstück um seine Achse dreht,
**dadurch gekennzeichnet, dass** die Rollen (2 bis 5) des unteren und/oder des oberen Rollenpaares (3, 4; 2, 5) in unterschiedlicher Höhe liegen, und dass die Kontaktstelle (32) zwischen dem Schneidrad (18) und dem Werkstück (13) in einer Ebene (33) liegt, die senkrecht zu einer Verbindungsgeraden (34) zwischen den Achsen der Rollen (3, 4; 2, 5) des unteren oder des oberen Rollenpaares (3, 4; 2, 5) liegt, auf denen das Werkstück (13) aufliegt.

2. Trennvorrichtung nach Anspruch 1,
**dadurch gekennzeichnet, dass** die Kontaktstelle (32) in einer Axialebene (29) des Schneidrades (18) liegt, die sich in Verstellrichtung des Schneidrades (18) erstreckt.

3. Trennvorrichtung nach Anspruch 1 oder 2,
**dadurch gekennzeichnet, dass** die Rollen (2, 3) auf der einen Seite der Rollenpaare (3, 4; 2, 5) größeren Abstand voneinander haben als die Rollen (4, 5) auf der anderen Seite der Rollenpaare.

4. Trennvorrichtung nach einem der Ansprüche 1 bis 3,
**dadurch gekennzeichnet, dass** diejenigen Rollen (4, 5), die benachbart zur Außenseite eines Bettes (1) der Trennvorrichtung liegen, jeweils höher als die gegenüberliegenden Rollen (2, 3) der Rollenpaare liegen.

5. Trennvorrichtung nach einem der Ansprüche 1 bis 4,
**dadurch gekennzeichnet, dass** die tiefer liegenden Rollen (2, 3) der Rollenpaare benachbart zu einer Linearführung (14) für das Schneidrad (18) liegen.

6. Trennvorrichtung nach einem der Ansprüche 1 bis 5,
**dadurch gekennzeichnet, dass** die Rollen (2 bis 5) gleichen Durchmesser haben.

## Claims

1. Cutting device comprising rollers (2 to 5) for supporting workpieces (13), such as bars, pipes and the like, said rollers lying in pairs opposite each other and the lower roller pair (3, 4) of which is at distance below the upper roller pair (2, 5), and the rollers of the lower roller pair (3, 4) are spaced a smaller distance apart from each other than the rollers of the upper roller pair (2, 5), and having a cutting wheel (18), which is linearly displaceable in the direction of the support and which during the separating process turns the workpiece about the axis thereof,
**characterized in that**
the rollers (2 to 5) of the lower and/or the upper roller pair (3, 4; 2, 5) are at different levels, and that the contact point (32) between the cutting wheel (18) and the workpiece (13) lies in a plane (33) which is perpendicular to a straight connecting line (34) between the axes of the rollers (3, 4; 2, 5) of the lower roller pair or the upper roller pair (3, 4; 2, 5), on which the workpiece (13) rests.

2. Cutting device according to Claim 1,
**characterized in that**
the contact point (32) lies in an axial plane (29) of the cutting wheel (18), said plane extending in the displacement direction of the cutting wheel (18).

3. Cutting device according to Claim 1 or Claim 2,
**characterized in that**
the rollers (2, 3) on the one side of the roller pairs (3, 4; 2, 5) are a greater distance apart from each other than the rollers (4, 5) on the other side of the roller pairs.

4. Cutting device according to one of Claims 1 to 3,
**characterized in that**
those rollers (4, 5) which are adjacent to the outer side of a bed (1) of the cutting, device are each located higher than the opposite rollers (2, 3) of the roller pairs.

5. Cutting device according to one of Claims 1 to 4,
**characterized in that**
the lower lying rollers (2, 3) of the roller pairs are located adjacent to a linear guide (14) for the cutting wheel (18).

6. Cutting device according to one of Claims 1 to 5,
**characterized in that**
the rollers (2 to 5) have the same diameter.

## Revendications

1. Dispositif de coupe comportant des rouleaux (2 à 5) pour le support de pièces (13) telles que tiges, tuyaux et analogues, qui sont opposés les uns aux autres par paires, lesquelles la paire de rouleaux inférieure (3, 4) se situe à une distance en dessous de la paire de rouleaux supérieure (2, 5) et les rouleaux de la paires de rouleaux inférieure (3, 4) sont à une distance plus petite les uns des autres que les rouleaux de la paire de rouleaux supérieure (2,5) et avec une roue de coupe (18), qui peut être réglée linéairement en direction du support et tourne la pièce autour de son axe lors de l'opération de coupe, **caractérisé en ce que** les rouleaux (2 à 5) de la paire de rouleaux inférieure et/ou supérieure (3, 4; 2, 5) se situent à une hauteur différente et **en ce que** le point de contact (32) se situe dans un plan (33) entre la roue de coupe (18) et la pièce (13) qui est perpendiculaire à une droite de liaison (34) entre les axes des rouleaux (3, 4; 2, 5) de la paire de rouleaux inférieure (3, 4 ; 2, 5) ou supérieure, sur lesquelles repose la pièce (13).

2. Dispositif de coupe selon la revendication 1, **caractérisé en ce que** le point de contact (32) se situe dans un plan axial (29) de la roue de coupe (18) qui s'étend dans la direction de réglage de la roue de coupe (18).

3. Dispositif de coupe selon la revendication 1 ou 2, **caractérisé en ce que** les rouleaux (2, 3) sont sur un côté des paires de rouleaux (3, 4; 2, 5) à une plus grande distance les uns des autres que les rouleaux (4, 5) sur l'autre côté des paires de rouleaux.

4. Dispositif de coupe selon l'une quelconque des revendications 1 à 3, **caractérisé en ce que** les rouleaux (4, 5) qui se trouvent adjacents au côté extérieur d'un banc (1) du dispositif de coupe, se situent respectivement plus hauts que les rouleaux opposés (2, 3) des paires de rouleaux.

5. Dispositif de coupe selon l'une quelconque des revendications 1 à 4, **caractérisé en ce que** les rouleaux se situant plus bas (2, 3) des paires de rouleaux se situent adjacentes à un guidage linéaire (14) pour la roue de coupe (18).

6. Dispositif de coupe selon l'une quelconque des revendications 1 à 5, **caractérisé en ce que** les rouleaux (2 à 5) ont le même diamètre.
